# EUROPÄISCHE PATENTSCHRIFT

(11) **EP 3 258 026 B1**
(45) Veröffentlichungstag und Bekanntmachung des Hinweises auf die Patenterteilung: **31.07.2019**
(21) Anmeldenummer: 17020265.9
(22) Anmeldetag: 26.01.2015
(51) Int. Cl.: E04B 1/76, B32B 5/32, B32B 7/02, B32B 7/12, B32B 27/06, B32B 27/34

(54) **DÄMMPLATTE UND VERFAHREN ZUM HERSTELLEN EINER DÄMMPLATTE SOWIE VERWENDUNG EINER DÄMMPLATTE**
INSULATING PANEL AND METHOD FOR MANUFACTURING AN INSULATING PANEL AND USE OF AN INSULATING PANEL
PANNEAU ISOLANT, PROCÉDÉ DE FABRICATION D'UN PANNEAU ISOLANT ET UTILISATION D'UN PANNEAU ISOLANT

(30) Priorität: 27.01.2014 EP 14000280; 30.06.2014 EP 14002227
(43) Veröffentlichungstag der Anmeldung: 20.12.2017
(62) Teilanmeldung aus: 15705492.5
(73) Patentinhaber: EJOT Baubefestigungen GmbH, 57334 Bad Laasphe (DE)
(72) Erfinder: Dratschmidt, Frank, 57319 Bad Berleburg (DE); Tiemann, Joachim, 59846 Sundern (DE)
(74) Vertreter: Von Rohr Patentanwälte Partnerschaft mbB

(56) Entgegenhaltungen:
- EP-A2- 1 500 752
- US-A- 4 653 246
- US-A1- 2009 094 923

## Beschreibung

Die vorliegende Erfindung betrifft eine Dämmplatte gemäß dem Oberbegriff des Anspruchs 1 sowie ein Verfahren zum Herstellen einer Dämmplatte und eine Verwendung einer mehrschichtigen Dämmplatte.

Die vorliegende Erfindung befasst sich generell mit Dämmplatten für Bauwerke. Bei den Dämmplatten handelt es sich insbesondere um sogenannte Dämmstoffplatten oder Wärmedämmplatten. Jedoch kann es sich auch um sonstige Fassadenplatten o. dgl. handeln.

Die Dämmplatten sind üblicherweise aus einem verhältnismäßig weichen oder nicht hoch belastbaren Dämmstoff, wie expandiertem Polystyrol o. dgl., hergestellt. Dementsprechend ist eine sichere Befestigung wichtig.

Die Befestigung der Dämmplatten erfolgt an einem Bauwerk, insbesondere an einem Haus oder sonstigen Gebäude, an einer Fassade, Wand oder Decke. Jedoch kann die Befestigung vorzugsweise grundsätzlich auch an einer sonstigen Unterkonstruktion erfolgen. Der Begriff "Bauwerk" ist daher vorzugsweise in einem entsprechend weiten Sinne zu verstehen.

Üblicherweise werden die Dämmplatten an dem Bauwerk angeklebt und zusätzlich mit Dübeln gesichert. Die befestigten Dämmplatten werden dann üblicherweise verputzt. Wichtig ist unter anderem, dass eine gute Dämmung, insbesondere Wärmedämmung, erreicht wird, besonders bevorzugt keine Wärmebrücken gebildet werden, dass sich Dübelteller o. dgl. von außen nicht abzeichnen und dass eine einfache baustellengerechte Befestigung bzw. Montage ermöglicht wird.

Dämmplatten mit eingebetteten Befestigungselementen zum Anschrauben bzw. Andübeln sind beispielsweise aus der US 4,653,246 und EP 2 474 685 A2 bekannt. Insbesondere die US 4,653,246 offenbart eine zweischichtige Dämmplatte im Sinne der vorliegenden Erfindung mit zwei vollflächig miteinander verbundenen Dämmschichten.

Die US 2009/0094923 A1 ist auf ein Isolationssystem gerichtet, das eine bauwerksseitige Dämmschicht und eine außenseitige Dämmschicht aufweist, wobei sich mehrteilige Befestigungselemente durch den gesamten Aufbau hindurch erstrecken. Die bauwerksseitige Dämmschicht überdeckt die Befestigungselemente nicht. Die außenseitige Dämmschicht überdeckt die Befestigungselemente nicht und weist eine größere Dichte als die bauwerksseitige Dämmschicht auf. Die Dämmschichten sind nicht vollflächig miteinander verbunden und bilden keine mehrschichtige Platte.

Die DE 202 16 146 U1 offenbart ein Dämmpaneel aus einem Hartschaumstoff und einer Deckschicht insbesondere aus glasfaserverstärktem Kunststoff. Das Paneel wird mittels Befestigungselementen an einem Bauwerk befestigt. Die Deckschicht stellt keine Dämmschicht dar. Die Befestigungselemente werden bauwerksseitig weder von der Deckschicht noch dem Dämmstoff überdeckt, sondern erstrecken sich auf die Bauwerkseite.

Die EP 2 305 910 A1 ist auf ein Dämmsystem mit einem Belüftungskanäle bildenden Abstandhalter zwischen zwei Dämmschichten gerichtet. Es werden keine Angaben über Biegesteifigkeit, Druckfestigkeit, Biegefestigkeit oder Dichte der Dämmschichten gemacht. Weiter erstreckt sich der Abstandhalter vollflächig zwischen den Dämmschichten, so dass die Dämmschichten nicht direkt miteinander verbunden sind.

Die US 2010/0236173 A1 offenbart eine Wandverkleidung mit einer außenseitigen Deckschicht aus Glas, Metall, Plastik oder Holz zur Erreichung einer hohen Stabilität einer darunter, bauwerksseitig angeordneten Dämmstoffschicht. Der Schichtaufbau wird über bauwerkseitige Befestigungselemente befestigt, die die Dämmstoffschicht bauwerksseitig nicht überdeckt.

Die EP 1 500 752 A2 offenbart ein Wärmedämmsystem, das ein Vakuum-Isolier-Paneel und eine außenseitig und/oder bauwerksseitig angeordnete Dämmplatte aufweist, wobei eine Befestigung über Befestigungselemente erfolgt, die bauwerksseitig nicht abgedeckt werden. Es werden keine Angaben über Biegesteifigkeit, Druckfestigkeit, Biegefestigkeit oder Dichte der Dämmschichten gemacht.

Der vorliegenden Erfindung liegt die Aufgabe zugrunde, eine Dämmplatte und ein Verfahren zum Herstellen einer Dämmplatte sowie eine Verwendung einer Dämmplatte anzugeben, wobei sehr hohe Traglasten ermöglicht werden, auch wenn die Dämmplatte teilweise oder zu einem wesentlichen Teil aus einem verhältnismäßig weichen bzw. nicht hoch belastbaren Dämmstoff, wie expandiertem Polystyrol o. dgl., hergestellt ist.

Die obige Aufgabe wird durch eine Dämmplatte gemäß Anspruch 1, durch ein Verfahren gemäß Anspruch 13 oder durch eine Verwendung gemäß Anspruch 15 gelöst. Vorteilhafte Weiterbildungen sind Gegenstand der Unteransprüche.

Ein Aspekt der vorliegenden Offenlegung liegt darin, dass die Dämmplatte eine erste Schicht aus einem ersten, vorzugsweise geschäumten Dämmmaterial und eine zweite Schicht aus einem zweiten, vorzugsweise geschäumten Dämmmaterial aufweist, wobei die erste Schicht die Befestigungselemente außenseitig und die zweite Schicht die Befestigungselemente bauwerksseitig jeweils zumindest im Wesentlichen, vorzugsweise vollständig, überdeckt. Insbesondere ist die Dämmplatte also mehrschichtig ausgebildet und die Befestigungselemente sind darin eingebettet bzw. eingebracht.

Insbesondere sind die beiden Schichten bzw. Dämmmaterialien großflächig und/oder stoffschlüssig bzw. nicht lösbar miteinander verbunden.

Besonders bevorzugt wird die erste Schicht, die insbesondere dicker als die zweite Schicht ausgebildet ist, ausschließlich von der zweiten Schicht gehalten.

Die zweite Schicht weist vorzugsweise eine höhere Biegesteifigkeit als die erste Schicht auf. So kann eine großflächigere oder bessere Lastverteilung bzw. Lasteinleitung von den Befestigungselementen in die Dämmplatte - insbesondere in der Flächenerstreckung der Dämmplatte - oder umgekehrt erfolgen.

Alternativ oder zusätzlich ist vorzugsweise vorgesehen, dass das Material der zweiten Schicht eine höhere Druckfestigkeit und/oder Biegefestigkeit und/oder Dichte als das Material der ersten Schicht aufweist. Hierdurch ergeben sich entsprechende Vorteile.

Die höhere Druckfestigkeit bezieht sich insbesondere auf den Widerstand gegen ein Eindrücken oder Durchstanzen der Befestigungselemente in das Material.

Vorschlagsgemäß können Lasten von den Befestigungselementen über die zweite Schicht großflächig auf die erste Schicht oder umgekehrt von der ersten Schicht über die zweite Schicht auf die Befestigungselemente übertragen werden. So werden sehr hohe Traglasten ermöglicht, auch wenn die Dämmplatte teilweise oder zu einem wesentlichen Teil aus dem ersten, verhältnismäßig weichen bzw. nicht hoch belastbaren Dämmmaterial hergestellt ist.

Die zweite Schicht bzw. das zweite Dämmmaterial bildet insbesondere eine bauwerksseitige Verstärkung der Dämmplatte zur Lastverteilung bzw. Erhöhung der Traglast ausgehend von den eingebetteten Befestigungselementen.

Vorzugsweise werden die Befestigungselemente, insbesondere in Form von Dübeltellern, oder plattenförmige bzw. flache Abschnitte bzw. Halteabschnitte der Befestigungselemente bauwerksnah in die Dämmplatte eingebettet oder eingebracht. Dies ist insbesondere für eine gute Wärmeisolierung bzw. zur Minimierung von Wärmebrücken vorteilhaft.

Unter dem Begriff "bauwerksnah" ist insbesondere zu verstehen, dass die Befestigungselemente bzw. deren Halteabschnitte näher an der Bauwerksseite als an der Außenseite der Dämmplatte, besonders bevorzugt in einem Bereich von 5 bis 30 % der Gesamtdicke der Dämmplatte, und/oder im Bereich der Grenzfläche der beiden Schichten angeordnet sind.

Ein vorschlagsgemäßes Verfahren zeichnet sich dadurch aus, dass die Befestigungselemente oder zumindest deren vorzugsweise plattenförmigen bzw. flachen Abschnitte bzw. Halteabschnitte zwischen einer ersten Platte als erste Schicht aus einem vorzugsweise geschäumten Dämmmaterial und einer zweiten, insbesondere (biege)steiferen Platte als zweite Schicht aus insbesondere druckfesterem Dämmmaterial eingelegt bzw. angeordnet und anschließend die beiden Platten zumindest im Wesentlichen vollflächig miteinander verbunden werden. Das Verbinden erfolgt besonders bevorzugt thermisch und/oder klebemittelfrei. Dies gestattet eine einfache und kostengünstige Herstellung.

Alternativ können die Platten aber auch miteinander verklebt oder auf sonstige Weise verbunden werden.

Besonders bevorzugt wird die erste Platte bzw. erste Schicht auf ihrer der zweiten Schicht zugewandten Seite mit Vertiefungen oder Ausnehmungen versehen, in die die Befestigungselemente vorzugsweise flächenbündig eingelegt werden. Die zweite Schicht bzw. zweite Platte wird dann mit der ersten Schicht bzw. Platte vorzugsweise zumindest im Wesentlichen vollflächig verbunden, wodurch die Befestigungselemente gesichert und festgelegt werden.

Die erste Schicht besteht vorzugsweise aus expandiertem Hartschaum, die zweite Schicht besteht vorzugsweise aus expandiertem oder extrudiertem Hartschaum. Dies ist einer guten Wärmedämmung zuträglich und gestattet eine kostengünstige Herstellung.

Die zweite Schicht ist vorzugsweise dünner als die erste Schicht. Dies ist einer guten Wärmedämmung und kostengünstigen Herstellung zuträglich.

Gemäß einer bevorzugten Ausführungsform ist die zweite Schicht vorzugsweise durchgehend über die gesamte Dämmplatte ausgebildet bzw. weisen die beiden Schichten zumindest im Wesentlichen die gleiche Flächenerstreckung auf.

Gemäß einer anderen bevorzugten Ausführungsform ist die zweite Schicht in ihrer Fläche bzw. Flächenerstreckung vorzugsweise kleiner als die Dämmplatte bzw. erste Schicht. Insbesondere erstreckt sich die zweite Schicht nicht bis zum Rand der Dämmplatte bzw. ersten Schicht.

Besonders bevorzugt bildet die zweite Schicht einen oder mehrere Trägerabschnitte, die zugeordnete Befestigungselemente bauwerksseitig abdecken und mit der ersten Schicht unlösbar bzw. stoffschlüssig verbunden sind.

Vorzugsweise sind die Trägerabschnitte vom Rand der Dämmplatte bzw. ersten Schicht beabstandet. Vorzugsweise sind die Trägerabschnitte jeweils - insbesondere mindestens um das 1,5-fache oder 2-fache - größer in ihrer Fläche oder in ihrem mittleren Durchmesser als das zugeordnete Befestigungselement, um eine möglichst großflächige Lastübertragung bzw. Lasteinleitung von der zweiten Schicht auf die erste Schicht oder umgekehrt zu ermöglichen.

Ein anderer Aspekt der vorliegenden Offenlegung liegt vorzugsweise darin, dass Befestigungselemente zur Befestigung an einem Bauwerk in die mehrschichtige Dämmplatte - insbesondere erst vor Ort bzw. auf der Baustelle - eingebracht werden, so dass vorzugsweise plattenförmige oder flache Halteabschnitte der Befestigungselemente im Grenzbereich zwischen den beiden Schichten angeordnet werden. Dies gestattet eine einfache und kostengünstige Herstellung. Weiter kann so eine großflächigere oder bessere Lastverteilung bzw. Lasteinleitung von den Befestigungselementen in die Dämmplatte - insbesondere in der Flächenerstreckung der Dämmplatte - oder umgekehrt erfolgen.

Erfindungsgemäß wird die vorschlagsgemäße Dämmplatte zur Herstellung einer Wärmedämmung eingesetzt, wobei die Dämmplatte an einem Bauwerk derart befestigt wird, dass die Dämmplatte mit ihrer Bauwerksseite dem Bauwerk zugewandt ist und die Verbindungselemente mit dem Bauwerk verbunden, insbesondere verdübelt, werden. Dies gestattet eine sehr einfache Befestigung, wobei aufgrund der insbesondere hohen Belastbarkeit bzw. Traglasten relativ wenige Befestigungselemente pro Dämmplatte bzw. Quadratmeter der Wärmedämmung erforderlich sind.

Weitere Aspekte, Merkmale, Eigenschaften und Vorteile der vorliegenden Erfindung ergeben sich aus den Ansprüchen und werden nachfolgend anhand der Zeichnung bevorzugter Ausführungsformen näher erläutert. Es zeigt:
- Fig. 1: einen schematischen Schnitt eines Teils einer vorschlagsgemäßen Dämmplatte gemäß einer ersten Ausführungsform;
- Fig. 2: eine schematische Draufsicht einer Außenseite der Dämmplatte mit vormontierten Befestigungselementen;
- Fig. 3: einen schematischen Schnitt eines Teils eines vorschlagsgemäßen Systems mit einer an einem Bauwerk angeklebten Dämmplatte und einer Bohrung in das Bauwerk durch ein mit der Dämmplatte verbundenes Befestigungselement hindurch;
- Fig. 4: einen zu Fig. 3 korrespondierenden schematischen Schnitt des Systems beim Einführen eines Dübels in die Dämmplatte;
- Fig. 5: einen zu Fig. 3 korrespondierenden Schnitt des Systems mit in das Befestigungselement eingeführtem Dübel;
- Fig. 6: einen zu Fig. 3 korrespondierenden schematischen Schnitt des Systems mit in das Bohrloch eingeführtem Dübel;
- Fig. 7: einen zu Fig. 3 korrespondierenden schematischen Schnitt des Systems mit in den Dübel eingeschraubter Schraube;
- Fig. 8: einen zu Fig. 3 korrespondierenden schematischen Schnitt des fertigen Systems;
- Fig. 9: einen schematischen Schnitt eines Teils einer vorschlagsgemäßen Dämmplatte gemäß einer zweiten Ausführungsform; und
- Fig. 10: eine schematische Draufsicht einer Bauwerksseite der Dämmplatte gemäß der zweiten Ausführungsform.

In den Figuren werden für gleiche Bauteile die gleichen Bezugszeichen verwendet, wobei sich entsprechende oder gleiche Vorteile ergeben, auch wenn eine wiederholte Beschreibung weggelassen ist.

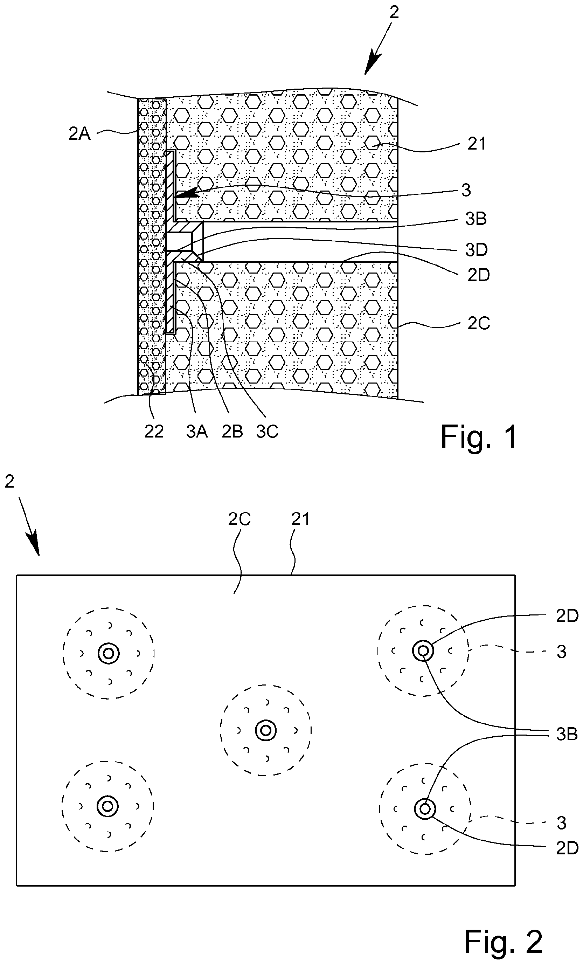

Fig. 1 zeigt in einem sehr schematischen, nicht maßstabsgerechten Schnitt eine vorschlagsgemäße Dämmplatte 2 gemäß einer ersten Ausführungsform mit vorzugsweise eingebetteten bzw. eingebrachten Befestigungselementen 3. In dem Ausschnitt gemäß Fig. 1 ist lediglich ein Befestigungselement 3 gezeigt.

Fig. 2 zeigt die vorschlagsgemäße Dämmplatte 2 in einer Draufsicht. Die eingebetteten bzw. eingebrachten Befestigungselemente 3 sind schematisch angedeutet.

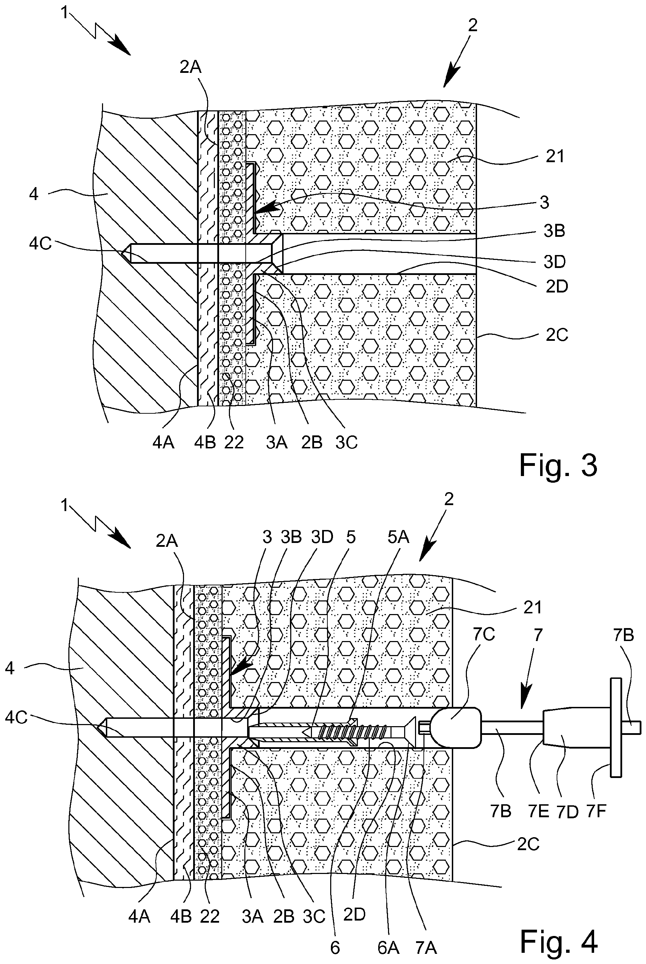

Fig. 3 zeigt in einem sehr schematischen, nicht maßstabsgerechten Schnitt ein bevorzugtes vorschlagsgemäßes Dämmsystem bzw. System 1, wobei die vorschlagsgemäßen Dämmplatten 2 mittels Befestigungselementen 3 an einem Bauwerk 4 befestigt werden. Dargestellt ist in Fig. 3 ein Ausschnitt bzw. Teil des Systems 1 bzw. einer Dämmplatte 2 mit einem Befestigungselement 3 bzw. im Bereich eines Befestigungselements 3. Vorzugsweise sind einer Dämmplatte 2 bzw. jeder Dämmplatte 2 mehrere Befestigungselemente 3 zugeordnet, wie beispielhaft in der Draufsicht gemäß Fig. 2 gezeigt.

Nachfolgend wird primär nur auf eine Dämmplatte 2 und ein Befestigungselement 3 zur Befestigung der Dämmplatte 2 Bezug genommen, auch wenn das System 1 vorzugsweise oder üblicherweise mehrere Dämmplatten 2 umfasst, die insbesondere auf Stoß angeordnet werden und/oder eine möglichst durchgehende Dämmschicht zur Dämmung des Bauwerks 4 bilden.

Die Dämmplatte 2 dient insbesondere der Wärmedämmung bzw. Wärmeisolierung. Die Dämmplatte 2 ist aus entsprechenden Dämmmaterialien (Wärmedämmstoffen), vorzugsweise aus aufgeschäumten Materialien, hergestellt.

Die Dämmplatte 2 ist vorzugsweise zumindest im Wesentlichen quadratisch oder rechteckig ausgebildet, wie aus der Draufsicht gemäß Fig. 2 ersichtlich. Jedoch kann die Dämmplatte 2 grundsätzlich auch jede sonstige Form aufweisen.

Die Dämmplatte 2 weist üblicherweise eine Dicke von mehreren cm, beispielsweise von 6 bis 30 cm, meistens etwa von 10 bis 16 cm, auf.

Die Dämmplatte 2 wird mit einer Flachseite am Bauwerk 4 befestigt. Diese Flachseite oder Hauptseite wird hier als Bauwerksseite 2A bezeichnet.

Bei dem Bauwerk 4 handelt es sich insbesondere um ein Gebäude, eine Mauer, eine Wand, besonders bevorzugt eine Außenwand, eine Decke o. dgl. Die Dämmplatte 2 kann mit ihrer Bauwerksseite 2A unmittelbar an dem Bauwerk 4 bzw. deren Oberfläche 4A angebracht werden. Jedoch kann zwischen dem Bauwerk 4 und der Dämmplatte 2 - zumindest bereichsweise, ggf. aber auch vollflächig - ein Hohlraum oder eine Schicht 4B, wie eine Zwischenschicht oder Verbindungsschicht, besonders bevorzugt zum Ausgleichen von Unebenheiten und/oder zum Verbinden bzw. Verkleben, wie in Fig. 3 angedeutet, vorgesehen sein. Besonders bevorzugt wird die Dämmplatte 2 mit dem Bauwerk 4 bzw. dessen Oberfläche 4A verklebt oder auf sonstige Weise, insbesondere materialschlüssig, verbunden.

Die Oberfläche 4A des Bauwerks 4 kann insbesondere von einem Putz, von Mauerwerk oder dergleichen gebildet sein. Insbesondere kann die Oberfläche 4A eine Fassade des Bauwerks 4 bilden oder darstellen.

Das Befestigungselement 3 ist vorzugsweise zumindest im Wesentlichen flach, gitterartig, rippenartig, plattenartig und/oder tellerartig ausgebildet. Beim Darstellungsbeispiel ist das Befestigungselement 3 oder dessen Halte- bzw. Plattenabschnitt 3A insbesondere im Wesentlichen scheibenartig bzw. kreisscheibenartig ausgebildet, wie aus Fig. 1, 2 und 3 ersichtlich.

Das Befestigungselement 3 oder zumindest dessen vorzugsweise plattenförmiger Abschnitt 3A ist vorzugsweise zumindest bauwerksnah in der Dämmplatte 2 bzw. benachbart zur Bauwerksseite 2A angeordnet.

Insbesondere ist das Befestigungselement 3 also näher an der Bauwerksseite 2A als an der Außenseite 2C der Dämmplatte 2 angeordnet, besonders bevorzugt in einem Bereich von 5 bis 30 % der Gesamtdicke der Dämmplatte 2. Dies bezieht sich insbesondere auf die Hauptebene der der Bauwerksseite 2A zugewandten Flachseite des vorzugsweise plattenförmigen oder flachen Befestigungselements 3.

Das Befestigungselement 3 ist vorzugsweise in die Dämmplatte 2 eingebettet bzw. eingebracht, insbesondere vollständig.

Die Dämmplatte 2 weist vorzugsweise eine erste Schicht 21 und eine zweite Schicht 22 auf. Die Dämmplatte 2 ist also vorzugsweise mehrschichtig bzw. zweischichtig aufgebaut.

Die erste Schicht 21 überdeckt die Befestigungselemente 3 oder deren Halteabschnitte 3 vorzugsweise zumindest im Wesentlichen außenseitig, insbesondere vollständig.

Die zweite Schicht 22 überdeckt die Befestigungselemente 3 oder deren Halteabschnitte 3 vorzugsweise zumindest im Wesentlichen bauwerksseitig, insbesondere vollständig.

Insbesondere sind die Befestigungselemente 3 bzw. deren vorzugsweise plattenförmigen Abschnitte oder Halteabschnitte 3A zumindest im Wesentlichen an oder im Bereich der Grenzfläche zwischen der ersten Schicht 21 und der zweiten Schicht 22 und/oder in der ersten Schicht 21 angeordnet.

Besonders bevorzugt sind die Befestigungselemente 3 in die erste Schicht 21 eingebracht, eingedrückt oder eingelegt oder eingebettet, ganz besonders bevorzugt derart, dass die Befestigungselemente 3 zumindest im Wesentlichen bündig mit der der zweiten Schicht 22 zugewandten Flachseite der ersten Schicht 21 abschließen. Besonders bevorzugt sind die Befestigungselemente 3 hierzu in Vertiefungen oder Aussparungen 2B der ersten Schicht 21 eingesetzt oder eingelegt oder eingedrückt.

Die Vertiefung oder Aussparung 2B kann vor dem Anbringen des jeweiligen Befestigungselements 3 an der ersten Schicht 21 oder durch entsprechendes Eindrücken des Befestigungselements 3 gebildet sein.

Die Vertiefung bzw. Aussparung 2B weist vorzugsweise entsprechend der relativ geringen Dicke des Befestigungselements 3 eine nur verhältnismäßig geringe oder entsprechende Tiefe auf. Die Dicke bzw. Tiefe beträgt nur einige Millimeter, insbesondere etwa 1 bis 8 mm.

Vorzugsweise wird das Befestigungselement 3 mit seiner Hauptebene bzw. Plattenebene oder seinem flachen Plattenabschnitt 3A parallel zu der Bauwerksseite 2A bzw. der Dämmplatte 2 oder an bzw. in der Dämmplatte 2 bzw. parallel zu deren Haupterstreckungsebene oder Plattenebene angeordnet.

Beim Darstellungsbeispiel ist das Befestigungselement 3 vorzugsweise aus einem relativ festen Kunststoff und/oder aus einem anderen Material als die Dämmplatten 2 hergestellt. Vorzugsweise ist das Befestigungselement 3 spritzgegossen.

Die erste Schicht 21 ist vorzugsweise dicker als die zweite Schicht 22, besonders bevorzugt mehr als doppelt oder mehr als dreifach so dick wie die zweite Schicht 22.

Die Dicke der ersten Schicht 21 beträgt vorzugsweise mehr als 80 mm, insbesondere mehr als 100 mm, besonders bevorzugt etwa 120 mm oder mehr.

Die zweite Schicht 22 weist vorzugsweise eine Dicke von mehr als 10 mm, insbesondere etwa 20 mm oder mehr, und/oder eine Dicke von weniger als 40 mm, insbesondere etwa 30 mm oder weniger auf.

Die Dicke der zweiten Schicht 22 beträgt vorzugsweise etwa 5 bis 30 % der Gesamtdicke der Dämmplatte 2 bzw. beiden Schichten 21, 22.

Die zweite Schicht 22 ist vorzugsweise dünner als die erste Schicht 21.

Die zweite Schicht 22 weist vorzugsweise eine höhere Biegesteifigkeit als die erste Schicht 21, insbesondere eine zumindest doppelt so große Biegesteifigkeit, auf.

Die Biegesteifigkeit stellt ein Maß für den Widerstand einer einwirkenden Kraft gegen eine Biegeverformung für ein Bauteil dar und wird vorzugsweise dadurch bestimmt, dass nur die erste Schicht 21 in Form einer Platte mit einem vorbestimmten Maß, insbesondere mit einer Dicke von 20 mm und in der Größe 50 cm x 100 cm, an den Schmalseiten, beispielsweise jeweils in einem Randbereich von 1 cm, aufgelegt und mittig mit einem vorbestimmten Gewicht, beispielsweise von 5 kg, mit einer definierten Fläche, vorzugsweise einer Kreisfläche mit 60, 90 oder 100 mm Durchmesser, mittig belastet wird. Der Reziprokwert der Durchbiegung der Platte bei einer definierten Kraft entspricht dann der Biegesteifigkeit.

Entsprechend kann dann die Biegesteifigkeit für die zweite Schicht 22 in Form einer entsprechend großen und dicken Platte bestimmt werden.

Alternativ kann bei Bestimmung der Biegesteifigkeit die Dicke der Platten auch der Dicke der jeweiligen Schicht 21 bzw. 22 der Dämmplatte 2, beispielsweise also 20 bis 30 mm für die zweite Platte bzw. Schicht 22 und beispielsweise etwa 100 bis 150 mm für die erste Platte bzw. Schicht 21, entsprechen.

Vorzugsweise weist das zweite Material der zweiten Schicht 22 eine höhere Druckfestigkeit als das erste Material der ersten Schicht 21 auf. Insbesondere ist die Druckfestigkeit mehr als doppelt oder mehr als dreifach so hoch.

Die Druckfestigkeit stellt einen Materialkennwert dar und wird vorzugsweise durch Belastung des Materials mit einem steifen runden Teller oder Stirnfläche eines Zylinders, besonders bevorzugt mit einem Durchmesser von 60, 90 oder 100 mm, ermittelt.

Insbesondere ist die Druckfestigkeit des zweiten Materials derart hoch, dass der Teller bzw. Zylinder bei einer Belastung von mehr als 1500 N, weniger als 5 mm, insbesondere weniger als 4 mm, besonders bevorzugt etwa 3 mm oder weniger, elastisch oder inelastisch eingedrückt wird. Bei dem ersten Material der ersten Schicht 21 ist die Druckfestigkeit hingegen wesentlich geringer und die Belastung beträgt üblicherweise (deutlich) weniger als 1000 N, bis es zu einer Zerstörung des Materials kommt.

Alternativ oder zusätzlich ist die Biegefestigkeit des zweiten Materials vorzugsweise größer als die des ersten Materials, insbesondere mehr als doppelt oder dreifach so groß.

Die Biegefestigkeit wird vorzugsweise gemäß EN 1208:2013-06, Prüfverfahren B für Probekörper, bestimmt.

Die Dichte des zweiten Materials ist vorzugsweise höher als die Dichte des ersten Materials.

Die Dichte des ersten Materials beträgt vorzugsweise weniger als 30 kg/m³, insbesondere weniger als 25 kg/m³, besonders bevorzugt etwa 20 kg/m³ oder weniger.

Die Dichte des zweiten Materials beträgt vorzugsweise mehr als 30 kg/m³, insbesondere mehr als 50 kg/m³, ganz bevorzugt etwa 100 kg/m³ oder mehr. Vorzugsweise ist die erste Schicht 21 aus einem ersten, vorzugsweise geschäumten Dämmmaterial und die zweite Schicht 22 aus einem zweiten, vorzugsweise geschäumten Dämmmaterial hergestellt.

Dämmmaterialen im Sinne der vorliegenden Erfindung weisen eine Wärmeleitfähigkeit lambda von weniger als 0,06 W/(m-K) auf.

Insbesondere ist die Wärmeleitfähigkeit des ersten Materials geringer als die des zweiten Materials.

Bei dem ersten Material handelt es sich besonders bevorzugt um einen expandierten Polystyrol-Hartschaum, auch EPS genannt.

Bei dem zweiten Material handelt es sich insbesondere um einen extrudierten Polystyrol-Hartschaum, auch XPS genannt. Es kann jedoch auch zum Beispiel expandierter Polystyrol-Hartschaum, also EPS, als zweites Material bzw. für die zweite Schicht 22 eingesetzt werden.

Die Dämmplatte 2 wird besonders bevorzugt dadurch hergestellt, dass eine erste Platte als erste Schicht 21 aus dem ersten Material mit den Vertiefungen bzw. Aussparungen 2B und vorzugsweise mit Durchbrechungen 2D versehen wird und dass die Befestigungselemente 3 in diese Vertiefungen bzw. Aussparungen 2B eingelegt bzw. in Durchbrechungen 2D eingeführt werden, wobei die Befestigungselemente 3 mit ihren bauwerksseitigen Flachsseite vorzugsweise zumindest im Wesentlichen flächenbündig mit der der zweiten Schicht 22 zugewandten Flachseite der ersten Schicht 21 abschließen. Alternativ können die Befestigungselemente 3 auch entsprechend in die Flachseite der ersten Platte bzw. Schicht 21 eingedrückt werden.

Die Befestigungselemente 3 können in dieser Lage bedarfsweise durch Kleben und/oder Klemmen (provisorisch) fixiert werden. Anschließend wird die zweite Platte bzw. Schicht 22 aus dem zweiten Material aufgelegt oder aufgebracht und besonders bevorzugt klebemittelfrei und/oder thermisch mit der ersten Schichtplatte bzw. Schicht 21 bzw. den ersten Material - besonders bevorzugt zumindest im Wesentlichen vollflächig - verbunden. Das Verbinden kann beispielsweise durch ein entsprechendes Erhitzen oder Erwärmen der Oberflächen bzw. Flachseiten erfolgen.

Alternativ kann aber auch ein Verkleben der beiden Platten bzw. Schichten 21, 22 erfolgen.

Alternativ kann zum Verbinden das zweite Material oder die zweite Schicht 22 auch gegen das erste Material bzw. die erste Schicht 21 geschäumt werden oder umgekehrt. Insbesondere wird hier ein expandierbares Material als erstes Material und ein (anderes) expandierbares Material als zweites Material und/oder EPS als erstes und zweites Material eingesetzt, wobei sich die beiden Materialien bzw. die beiden Schichten 21 und 22 in gewünschter Weise voneinander unterscheiden, insbesondere hinsichtlich ihrer Biegefestigkeit bzw. Biegesteifigkeit.

Beispielsweise kann das erste Material zur Bildung der ersten Schicht 21 in einer nicht dargestellten Form geschäumt oder expandiert und anschließend - insbesondere in der gleichen, dann vorzugsweise weiter geöffneten Form - das zweite Material zur Bildung der zweiten Schicht 22 gegen die erste Schicht 21 geschäumt bzw. expandiert werden, wobei insbesondere gleichzeitig das erste Material nachgeschäumt bzw. noch etwas mehr expandiert wird, wodurch eine feste, insbesondere stoffschlüssige, Verbindung zwischen den beiden Materialien bzw. Schichten 21 und 22 erreicht wird. Vor dem Einbringen bzw. Aufschäumen oder Expandieren des zweiten Materials werden vorzugsweise die Befestigungselemente 3 eingelegt. Alternativ können diese auch schon vor dem Aufschäumen des ersten Materials in die Form eingebracht bzw. in der Form gehalten sein, beispielsweise über nicht dargestellte Halter, die beispielsweise direkt die Durchbrechungen 2D bilden.

Die Dämmplatte 2 bildet vorzugsweise mit den eingebetteten Befestigungselementen 3 eine vorgefertigte Baueinheit. Jedoch ist es grundsätzlich auch möglich, die Befestigungselemente 3 erst vor Ort bzw. auf der Baustelle in gewünschter Weise in die zweischichtige bzw. mehrschichtige Dämmplatte 2 einzubringen, insbesondere wobei dies durch die erste Schicht 21 bzw. von außen und/oder mittels der bzw. durch die vorzugsweise werksseitig vorgesehenen Bohrungen bzw. Durchbrechungen 2D erfolgt.

Die Befestigungselemente 3 bzw. deren Halteabschnitte 3A werden vorzugsweise zwischen den beiden Schichten 21 und 22 bzw. im Bereich dieser Grenzschicht, also bauwerksnah, gehalten bzw. angeordnet.

Insbesondere kann bei Belastung das Befestigungselement 3 die Last auf die belastbare bzw. steife zweite Schicht 22 übertragen oder umgekehrt, wobei die zweite Schicht 22 großflächig oder vollflächig - insbesondere nur mit Ausnahme im Bereich der Befestigungselemente 3 bzw. Aussparungen 2B - mit der ersten Schicht 21 verbunden ist und dementsprechend für eine großflächige Lastverteilung und/oder -übertragung von der zweiten Schicht 22 auf die erste Schicht 21 und umgekehrt sorgt.

Die vorschlagsgemäße Dämmplatte 2 ist insbesondere nur zweischichtig aufgebaut. Jedoch kann die Dämmplatte 2 bedarfsweise oder optional auch eine zusätzliche Schicht, insbesondere auf der Außenseite eine Abdeckschicht aus einem anderen oder sonstigen Material, insbesondere aus einem anderen geschäumten Material, o. dgl. aufweisen.

Besonders bevorzugt genügen zur Befestigung der vorschlagsgemäßen Dämmplatte 2 vier Befestigungselemente 3 pro m² Dämmplattenfläche. Dies gestattet eine sehr einfache und kostengünstige und schnelle Montage, da insbesondere nur vier Schraub- oder Dübelverbindungen zu dem Bauwerk 4 pro m² hergestellt werden müssen.

Das Befestigungselement 3 weist vorzugsweise eine Durchbrechung 3B auf, um das Befestigungselement 3 mit dem Bauwerk 4, insbesondere mittels einer Dübelverbindung, verbinden zu können. Die Durchbrechung 3B ist vorzugsweise zentrisch am oder im Befestigungselement 3 angeordnet und/oder insbesondere schon herstellungsmäßig in dem Befestigungselement 3 gebildet, kann jedoch alternativ auch erst vor Ort bei der Befestigung an dem Bauwerk 4, beispielsweise durch Bohren, gebildet oder geöffnet werden.

Das Befestigungselement 3 weist vorzugsweise ein Positioniermittel auf, das hier insbesondere durch einen Vorsprung 3C gebildet ist. Das Positioniermittel dient vorzugsweise einer Positionierung des Befestigungselements 3 an der Dämmplatte 2 bzw. ersten Schicht 21, insbesondere bezüglich einer vorgeformten Durchbrechung 2D der Dämmplatte 2, und/oder einer Positionierung, Führung und/oder Widerlagerung eines Verbindungsmittels, wie eines Dübels 5 und/oder einer Schraube 6 zur Verbindung des Befestigungselements 3 mit dem Bauwerk 4.

Besonders bevorzugt ist eine Durchbohrung oder Durchbrechung 2D für das jeweilige Befestigungselement 3 nur in der ersten Schicht 21 bildet, wie insbesondere in dem schematischen Schnitt gemäß Fig. 1 angedeutet. Fig. 3 zeigt hingegen bereits die an dem Bauwerk 4 zumindest zunächst provisorisch befestigte Dämmplatte 2 mit durchbohrter zweiter Schicht 22 und angebohrtem Bauwerk 4.

Beim Darstellungsbeispiel ist das Positioniermittel bzw. der Vorsprung 3C vorzugsweise einstückig an das Befestigungselement 3 angeformt bzw. angespritzt und/oder dämmplattenseitig angeordnet. Insbesondere schließt sich der Vorsprung 3C dämmplattenseitig an die Durchbrechung 3B des Befestigungselements 3 an oder bildet diese.

Der Vorsprung 3C ist vorzugsweise hülsenartig bzw. hohlzylindrisch und/oder dickwandig ausgebildet.

Das Positioniermittel bzw. der Vorsprung 3C ist vorzugsweise mit einer inneren Einführschräge 3D versehen. Diese ist insbesondere zumindest im Wesentlichen konisch ausgebildet. Jedoch kann diese auch durch über den Umfang verteilte Führungsrippen, Schrägen o. dgl. gebildet sein.

Das Befestigungselement 3 wird vorzugsweise mit seinem Positioniermittel bzw. Vorsprung 3C in die zugeordnete Durchbrechung 2D der Dämmplatte 2 eingeführt. Die Durchbrechung 2D ist insbesondere durch eine Durchgangsbohrung gebildet. Die Durchbrechung 2D erstreckt sich quer bzw. senkrecht zur Plattenebene und/oder verbindet die beiden Flachseiten 2A und 2C der Dämmplatte 2.

Das Positioniermittel bzw. der Vorsprung 3C ist vorzugsweise relativ kurz ausgebildet, insbesondere beträgt die axiale Länge im Wesentlichen nur 0,5 cm bis 4 cm. Positioniermittel bzw. der Vorsprung 3C ist vorzugsweise kurz im Verhältnis zur Dicke der Dämmplatte 2 bzw. Länge der Durchbrechung 2D ausgebildet. Das Positioniermittel bzw. der Vorsprung 3C kann aber insbesondere zur besseren Führung auch länger gestaltet sein.

Die Dämmplatte 2 bzw. die erste Schicht 21 wird vorzugsweise zuerst mit der Durchbrechung 2D bzw. mehreren Durchbrechungen 2D versehen, insbesondere durch entsprechendes Bohren. Anschließend erfolgt bei der Vormontage die Befestigung oder das Anlegen des Befestigungselements 3 bzw. der Befestigungselemente 3 an der ersten Schicht 21. Hierzu wird das jeweilige Befestigungselement 3 mit seinem Positioniermittel bzw. Vorsprung 3C in die zugeordnete Durchbrechung 2D bauwerksseitig eingeführt oder eingedrückt. Der Außendurchmesser des Positioniermittels bzw. Vorsprungs 3C ist entsprechend an den lichten oder inneren Durchmesser der Durchbrechung 2D angepasst. So kann eine sehr einfache und schnelle Positionierung erfolgen.

Das bauwerksseitig entsprechend positionierte Befestigungselement 3 wird zusammen mit der ersten Schicht 21 dann von der zweiten Schicht 22 überdeckt, wobei die beiden Platten bzw. Schichten 21, 22 verbunden werden, wie bereits erwähnt. So wird die vormontierte Baueinheit aus Dämmplatte 2 und Befestigungselement(en) 3 vorzugsweise hergestellt. Dies erfolgt insbesondere werksseitig.

Vorzugsweise ist der Durchmesser der Durchbrechung 2D mehr als 25 %, insbesondere mehr als 50 %, größer als der Durchmesser der Durchbrechung 3B, so dass das Einführen des Dübels 5 und der Schraube 6 oder eines sonstigen Verbindungselements erleichtert und/oder insbesondere ohne Verformung der ersten Schicht 21 bzw. des Dämmstoffs durch die Durchbrechung 2D ermöglicht wird und/oder so dass die Durchbrechung 2D Bohrmehl bzw. -staub beim Bohren in das Bauwerk 4 aufnehmen kann.

Nach der Vormontage werden die Baueinheiten bzw. die mit den Befestigungselementen 3 versehenen Dämmplatten 2 an dem Bauwerk 4 befestigt. Dies wird nachfolgend unter Bezugnahme auf Fig. 3 bis 8 näher erläutert.

Die vormontierte, also mit Befestigungselementen 3 versehene Dämmplatte 2 wird am Bauwerk 4 befestigt. Besonders bevorzugt wird die Dämmplatte 2 am Bauwerk 4 bzw. dessen Oberfläche 4A angeklebt. So wird eine erste oder hilfsweise bzw. temporäre Verbindung der Dämmplatte 2 mit dem Bauwerk 4 erreicht. Insbesondere dient hierbei die optionale Schicht 4B dem Verkleben und/oder Ausgleich von Unebenheiten o. dgl. Dieses erste bzw. temporäre Verbinden kann jedoch auch auf sonstige geeignete Art und Weise erfolgen oder alternativ durch ein Halten der jeweiligen Dämmplatte 2 am Bauwerk 4 erreicht werden.

Anschließend wird das Befestigungselement 3 mit dem Bauwerk 4 (dauerhaft oder hoch belastbar oder zusätzlich) verbunden, insbesondere durch eine Dübelverbindung oder auf sonstige geeignete Weise. Dieses (zweite) Verbinden der Dämmplatte 2 zusätzlich zu dem Verkleben erfolgt vorzugsweise bei allen Befestigungselementen 3, auch wenn dies nachfolgend beispielhaft nur für ein Befestigungselement 3 beschrieben wird.

Beim Darstellungsbeispiel wird in einem ersten Schritt durch die Dämmplatte 2 bzw. deren Durchbrechung 2D und das Befestigungselement 3 und durch die zweite Schicht 22 hindurch in das Bauwerk 4 gebohrt, um ein Bohrloch 4C in dem Bauwerk 4 zu erzeugen, wie beispielhaft in Fig. 3 dargestellt. Der entsprechende Bohrer ist in Fig. 3 nicht dargestellt. Die Positionierung des Bohrers wird jedoch durch das Positioniermittel bzw. den Vorsprung 3C bzw. die Einführschräge 3D ermöglicht oder erreicht, so dass von außen sehr einfach durch das Befestigungselement 3 hindurch in das Bauwerk 4 - mit der gewünschten Tiefe - gebohrt werden kann.

In einem zweiten Schritt wird dann der Dübel 5, vorzugsweise mit vormontiertem Spreizelement, insbesondere mit teilweise eingeschraubter Schraube 6, in die Dämmplatte 2 bzw. deren Durchbrechung 2D eingeführt. Dies kann sehr einfach manuell erfolgen und ist insbesondere aufgrund des relativ großen Durchmessers der Durchbrechung 2D sehr einfach möglich. Zum weiteren Einführen wird dann vorzugsweise ein Werkzeug 7 eingesetzt. Dies ist beispielhaft in Fig. 4 dargestellt, die einen schematischen Schnitt (Ausschnitt) entsprechend Fig. 3 zeigt.

Als Werkzeug 7 kann beispielsweise ein Schraubendreher oder sonstiges auf der Baustelle verfügbares Handwerkzeug eingesetzt werden. Vorzugsweise wird jedoch ein Werkzeug 7 eingesetzt, das vorzugsweise sowohl zum (korrekten) Einführen als auch zum Verspannen oder Festziehen der Dübelverbindung, insbesondere zum Einschrauben, einsetzbar ist.

Das vorschlagsgemäß besonders bevorzugt eingesetzte Werkzeug 7 weist beim Darstellungsbeispiel einen Werkzeugkopf 7A, einen Schaft 7B, einen ersten Führungsabschnitt 7C, einen zweiten Führungsabschnitt 7D, ein erstes Markiermittel 7E und/oder ein zweites Markiermittel 7F auf.

Bei dem Werkzeugkopf 7A handelt es sich vorzugsweise um einen Bit, einen sogenannten Sechsrund oder sonstigen Einsatz bzw. Mehrkantschlüssel, der insbesondere formschlüssig bzw. drehfest mit dem Spreizelement bzw. der Schraube 6 bzw. dessen Kopf 6A in Eingriff bringbar ist und/oder der vorzugsweise auswechselbar ist.

Das Werkzeug 7 bzw. der Schaft 7B ist vorzugsweise zur Aufnahme in einen Schrauber o. dgl. ausgebildet und/oder vorzugsweise zumindest bereichsweise als Mehrkant ausgeführt.

Der erste Führungsabschnitt 7C ist vorzugsweise durch einen entsprechenden Körper, vorzugsweise aus Kunststoff, gebildet und/oder im Bereich einer Aufnahme für den Werkzeugkopf 7A angeordnet. Der erste Führungsabschnitt 7C gestattet insbesondere eine seitliche Führung und/oder Zentrierung des Werkzeugkopfs 7A, insbesondere zur zentrischen Ausrichtung zum Schraubenkopf 6A. Die Schraube 6 wird ihrerseits durch das Befestigungselement 3 bzw. die Durchbrechung 3B bzw. die Einführschräge 3D, insbesondere mittels des darin eingeführten Dübels 5 oder daran anliegenden Dübels 5, zentrisch oder koaxial gehalten bzw. geführt.

Der zweite Führungsabschnitt 7D ist vorzugsweise axial verstellbar, insbesondere mittels einer nicht dargestellten Madenschraube o. dgl., am Werkzeug 7 oder dessen Schaft 7B festlegbar, insbesondere zur Anpassung an verschiedene Dämmplattendicken. Der zweite Führungsabschnitt 7D gestattet insbesondere eine zusätzliche seitliche Führung in der Durchbrechung 2D bzw. im Dämmstoff beim Einschrauben der Schraube 6.

Das erste Markiermittel 7E ist vorzugsweise durch eine Markierung, eine Schulter o. dgl., gebildet.

Das zweite Markiermittel 7F ist vorzugsweise durch eine Markierung, eine Schulter, einen Anschlag o. dgl., gebildet, wie in Fig. 2 angedeutet.

Die beiden Markiermittel 7E und 7F sind vorzugsweise axial verstellbar, insbesondere zur Anpassung an verschiedene Dämmplattendicken, Dübellängen und/oder Schraubenlängen. Die axiale Verstellbarkeit kann insbesondere dadurch erreicht werden, dass das erste und/oder zweite Markiermittel 7E, 7F zusammen mit dem zweiten Führungsabschnitt 7D verstellbar oder von diesem gebildet ist bzw. sind. Jedoch können die Markiermittel 7E, 7F auch separat davon gebildet und/oder verstellbar sein.

Fig. 4 zeigt in einem zu Fig. 3 korrespondierenden, schematischen Schnitt einen Zustand, bei dem der Dübel 5 zusammen mit der vorzugsweise teilweise in den Dübel 5 bereits eingeschraubten Schraube 6 soweit eingeführt bzw. eingeschoben ist, beispielsweise mittels des Werkzeugs 7, das das in Einführungsrichtung vordere Ende des Dübels 5 bereits in der Nähe des Befestigungselements 3 bzw. Vorsprungs 3C bzw. der Einführschräge 3D liegt. Der Dübel 5 und die Schraube 6 liegen jedoch noch innen auf der Durchbrechung 2D der Dämmplatte 2 auf, sind also noch nicht zentrisch geführt bzw. ausgerichtet. Vielmehr ist hier die Schraube 6 bzw. deren Kopf 6A und insbesondere auch der Dübel 5 noch radial bzw. quer zu den Werkzeugkopf 7A versetzt.

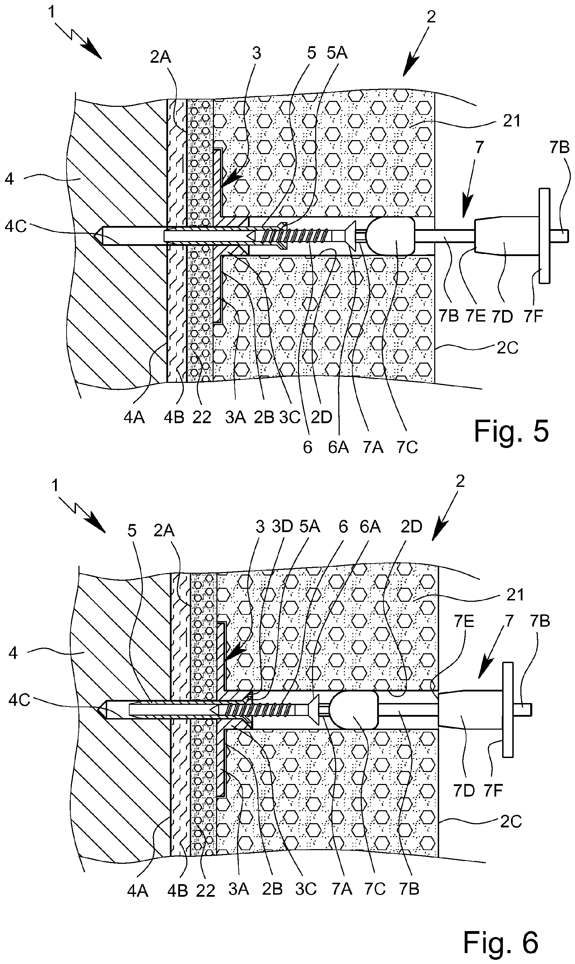

Fig. 5 zeigt einen Zustand, bei dem der Dübel 5 bereits so weit eingeführt bzw. eingeschoben ist, insbesondere mittels des Werkzeugs 7, dass das in Einführungsrichtung vordere Ende des Dübels 5 bereits das Befestigungselement 3 bzw. den Anfang der Durchbrechung 3B des Befestigungselements 3 bzw. die Einführschräge 3D erreicht. Während des Einführens und bis zum Erreichen diesen Zustands wird der Dübel 5 bzw. dessen Spreizelement, hier die Schraube 6, und/oder ein sonstiges Verbindungsmittel oder -element von der Durchbrechung 2D bzw. von der Dämmplatte 2 bzw. von dem Dämmstoff der Dämmplatte 2 seitlich geführt. Die Einführschräge 3D und sich anschließende Durchbrechung 3B dienen dann insbesondere einer (weiteren) Zentrierung oder axialen Positionierung bzw. Führung des Dübels 5 und damit auch der Schraube 6. Dementsprechend ist in der Darstellung gemäß Fig. 5 die Schraube 6 mit ihrem Kopf 6A bereits koaxial in dem vorzugsweise zentrisch geführten Werkzeugkopf 7A ausgerichtet.

Fig. 6 zeigt in einem zu Fig. 3 bis 5 korrespondierenden, schematischen Schnitt das Befestigen der Dämmplatte 2 bzw. des Befestigungselements 3 an dem Bauwerk 4, wobei der Dübel 5 nun vollständig eingeführt ist, insbesondere wobei der Dübel 5 mit seinem Dübelkopf 5A am Befestigungselement 3 bzw. Vorsprung 3C bzw. an der Einführschräge 3D zur Anlage kommt. Dieser vollständig eingeführte Zustand wird einem nicht dargestellten Benutzer vorzugsweise durch das erste Markiermittel 7E angezeigt, beim Darstellungsbeispiel insbesondere dadurch, dass das Markiermittel 7E in der Ebene der Außenseite 2C der Dämmplatte 2 liegt, wie in Fig. 6 angedeutet. Jedoch sind auch andere Kennzeichnungen möglich. Beispielsweise kann auch ein separates Werkzeug nur zum korrekten Einführen des Dübels 5 eingesetzt werden. In diesem Fall kann das separate Werkzeug einen Anschlag als erstes Markiermittel 7E aufweisen, so dass nur ein Einführen bis zu einer bestimmten Tiefe möglich ist. Der Anschlag kann dann beispielsweise im korrekt oder vollständig eingeführten Zustand auf der Außenseite 2C der Dämmplatte 2 zur Anlage kommen.

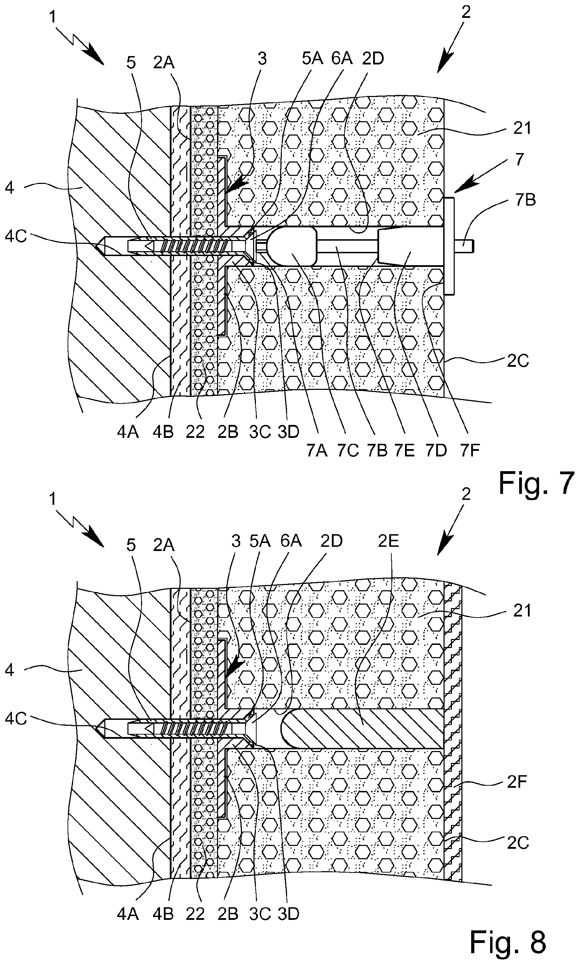

Nach dem (vollständigen) Einführen bzw. Einstecken des Dübels 5 erfolgt das Spreizen des Dübels 5 im Bauwerk 4 bzw. Bohrloch 4C. Dies erfolgt mit Hilfe des Spreizelements, hier insbesondere durch Einschrauben der Schraube 6. Im gespreizten Zustand ist die Dübelverbindung hergestellt. Dieser Zustand ist in Fig. 7 in einem zu den Fig. 1 bis 4 korrespondierenden Schnitt schematisch dargestellt. Hier ist die Schraube 6 also vollständig in den Dübel 5 eingeschraubt. Das Einschrauben ist insbesondere mittels des Werkzeugs 7 erfolgt. Dieser eingeschraubte Zustand wird vorzugsweise durch das zweite Markiermittel 7F angezeigt, hier insbesondere dadurch, dass eine Schulter oder ein Anschlag in der Ebene der Außenseite 2C liegt oder auf dieser zur Anlage kommt.

Im eingeschraubten Zustand kommt die Schraube 6 mit ihrem Schraubenkopf 6A vorzugsweise am Dübelkopf 5A und/oder am Befestigungselement 3 bzw. Vorsprung 3C bzw. deren Einführschräge 3D zur Anlage.

An Stelle der Schraube 6 kann jedoch auch ein sonstiges Spreizmittel, beispielsweise ein einzuschlagender Bolzen zum Spreizen des Dübels 5 o. dgl. verwendet werden.

Gemäß einer nicht dargestellten Ausführungsalternative kann das Verbinden des Befestigungselements 3 mit dem Bauwerk 4 beispielsweise auch durch eine Klebeverbindung, einen Klebedübel, einen Klebeanker o. dgl., erfolgen. In diesem Fall wird dann ein entsprechender Klebedübel, Klebeanker o. dgl. eingeführt und beispielsweise mit dem Bauwerk 4, insbesondere in der Bohrung 4C, verklebt oder auf sonstige Weise damit verbunden oder darin verankert.

Alternativ kann z.B. auch eine Beton- oder Mauerwerkschraube verwendet werden, die ohne eine Spreizhülse direkt im Untergrund/Bauwerk 4 eingeschraubt wird.

In den vorgenannten Fällen erfolgt ein direktes Verbinden des Befestigungselements 3 mit dem Bauwerk 4. Das Befestigungselement 3 ist seinerseits mit der Dämmplatte 2 verbunden, insbesondere durch die bereits oben erläuterte Vormontage. Dementsprechend ist dann die Dämmplatte 2 über das Befestigungselement 3 mit dem Bauwerk 4 fest verbunden und wird dadurch ausreichend sicher am Bauwerk 4 bzw. vom Bauwerk 4 gehalten.

Nach dem Befestigen des Befestigungselements 3 am Bauwerk 4, insbesondere nach dem Herstellen der Dübelverbindung bzw. dem vollständigen Einschrauben der Schraube 6, wird das Werkzeug 7 entfernt und die Durchbrechung 2D in der Dämmplatte 2 verschlossen. Dieses Verschließen erfolgt vorzugsweise durch einen Stopfen 2E, wie in Fig. 8 angedeutet. Der Stopfen 2E wird vorzugsweise klemmend in die Dämmplatte 2 bzw. deren Durchbrechung 2D eingesteckt. Vorzugsweise besteht der Stopfen 2E aus dem gleichen Dämmstoff wie die Dämmplatte 2 oder einen ähnlichen Dämmstoff. Ggf. kann der Stopfen 2E auch aus einem Dämmmaterial mit besserer Wärmeisolierung als die Dämmplatte 2 bestehen, da die Länge des Stopfens 2E geringer als die Dicke der Dämmplatte 2 ist.

Durch das Verschließen der Durchbrechung 2D mit einem dämmenden, insbesondere wärmeisolierenden Stopfen 2E kann die Bildung einer Wärmebrücke im Bereich der Durchbrechung 2D vermieden oder zumindest verringert werden.

Der bevorzugte Einsatz eines gleichen oder ähnlichen Dämmstoffs für den Stopfen 2E wie für die Dämmplatte 2 hat den Vorteil, dass kein Einbringen unterschiedlicher Materialien in die Dämmplatte 2 erfolgt. Dies ist insbesondere hinsichtlich einer außenseitigen Abdeckung bzw. einem außenseitigen Verputzen des Systems 1 bzw. der Dämmplatte 2 vorteilhaft, da so sich sonst oftmals im Bereich von Durchbrechungen oder Befestigungselementen ergebende Abzeichnungen vermieden werden können. Des Weiteren ist der Einsatz dieses Materials dahingehend von Vorteil, dass nur sortenreines Material in der Dämmplatte 2 vorhanden ist, wenn die Dämmplatte 2 später einmal entsorgt werden muss (die Befestigungselemente 3 befinden sich nur an einer Flachseite bzw. der Bauwerksseite 2A, daher kann die Dämmplatte 2 von den Befestigungselementen 3 entfernt werden).

In Fig. 8 ist schematisch angedeutet, dass das vorschlagsgemäße System 1 bzw. die vorschlagsgemäße Dämmplatte 2 außenseitig vorzugsweise abgedeckt wird, insbesondere durch einen Putz 2F. Bei diesem Putz 2F handelt es sich insbesondere um ein Material oder einen Aufbau auf Mineralbasis, Kunststoffbasis o. dgl., das bzw. der vorzugsweise durch ein Gewebe verstärkt ist. Der Putz 2F ist vorzugsweise sehr dünn ausgeführt und bildet insbesondere eine gegenüber dem Dämmstoff bzw. der Dämmplatte 2 relativ harte Oberfläche und/oder schützt die Dämmplatte 2 vor Umwelteinflüssen, wie Schlagregen, Druckbeanspruchung, Sonneneinstrahlung o. dgl.

Wie bereits erwähnt ist das Positioniermittel bzw. der Vorsprung 3C nur optional am Befestigungselement 3 vorhanden. Dieser kann ggf. auch entfallen. Bedarfsweise kann die Einführschräge 3D dann auch unmittelbar in dem plattenförmigen Bereich des Befestigungselements 3 am dämmplattenseitigen Ende der Durchbrechung 3B gebildet sein.

Wie bereits erwähnt, ist das Vorsehen von Durchbrechungen 2D in der Dämmplatte 2 vor dem Montieren der Befestigungselemente 3 an der Dämmplatte 2 optional. Es besteht auch die Möglichkeit, dass zunächst keine Durchbrechungen 2D gebildet werden. Stattdessen werden die Befestigungselemente 3 nur bauwerksseitig an der Dämmplatte 2 befestigt bzw. mit dieser verbunden. Die Vormontage ist dann abgeschlossen. In diesem Fall weisen die Befestigungselemente 3 vorzugsweise also keinen Vorsprung 3C auf. Weiter kann in diesem Fall eine Ausbildung einer Durchbrechung 3B an den Befestigungselementen 3 entfallen. Vielmehr werden die Dämmplatten 2 mit den vormontierten Befestigungselementen 3 wieder zunächst am Bauwerk 4 in einem ersten Schritt, insbesondere durch Ankleben, befestigt. Anschließend wird durch die Dämmplatte 2 und das darunterliegende Befestigungselement 3 hindurch in das Bauwerk 4 gebohrt. Die Lage der Bohrungen kann beispielsweise durch entsprechende, werksseitig angebrachte Markierungen auf der Außenseite 2C der Dämmplatte 2 und/oder durch vorbestimmte Lagen der Befestigungselemente 3, beispielsweise in den Ecken und/oder in der Mitte der Dämmplatte 2, erleichtert werden.

Nach dem Bohren kann anschließend ein Einführen des Dübels 5 mit vorzugsweise vormontiertem Spreizelement, insbesondere teilweise eingeschraubter Schraube 6, wie bereits beschrieben, erfolgen. Versuche haben gezeigt, dass dies aufgrund des relativ weichen Dämmstoffs der Dämmplatte 2 möglich ist. Der Dämmstoff weicht beim Einführen des Dübels 5 mit seinem gegenüber dem Bohrloch im Durchmesser etwas größeren Dübelkopf 5A und/oder Schraubenkopf 6A radial aus, so dass ein Einführen und anschließendes Einschrauben möglich sind. Diese Variante hat den Vorteil, dass die werksseitige Herstellung bzw. Vormontage noch einfacher ist, da keine Durchbrechungen 2D vorher gebildet werden. Vielmehr werden diese Durchbrechungen 2D in der Dämmplatte 2 genauso wie die Durchbrechungen 3B in den Befestigungselementen 3 erst vor Ort auf der Baustelle durch das Bohren hergestellt.

Die vorschlagsgemäße Lösung führt zu vielen verschiedenen Vorteilen:
Das Befestigungselement 3 sitzt bauwerksnah in der Dämmplatte 2.

Die Herstellung der Durchbrechungen 2D und/oder 3B, also von Montageöffnungen, kann bereits werksseitig bzw. fabrikseitig erfolgen. Dies verringert den Arbeitsaufwand vor Ort.

Die Durchbrechungen 2D der Dämmplatte 2 können optimal und gut gedämmt verschlossen werden. Störstellen in der Dämmplatte 2 können vermieden werden. Insbesondere wird keine Wärmebrücke gebildet. Es erfolgt keine Behinderung von Diffusionsvorgängen. Weiter können optimale Schalldämmeigenschaften erreicht werden.

Ein weiterer Vorteil liegt darin, dass die Recyclingfähigkeit sehr hoch ist, da keine "Verunreinigungen" der Dämmplatten 2 durch Einbringen von Fremdstoffen in die Dämmplatten 2 erfolgt.

Zwängungsspannungen in den Dämmplatten 2 werden vermieden, da Verformungen der Dämmplatten 2 nicht behindert werden.

Es kann eine optimale Verbindung zwischen den Dämmplatten 2 und den Befestigungselementen 3 durch die insbesondere werksseitige Verbindung bzw. Vormontage erreicht und sichergestellt werden. Insbesondere ist auch eine industrielle Qualitätskontrolle möglich.

Bei der vorschlagsgemäßen Lösung können kurze sowie kostengünstige und insbesondere auch handelsübliche Dübel 5 bzw. Dübelsysteme und/oder Schrauben 6 eingesetzt werden.

Weiter können die handelsüblichen Dübel 5 auch bei verschiedenen Dämmplattendicken eingesetzt werden, da vorzugsweise die Dicke der zweiten Schicht 22 auch bei variierender Gesamtdicke der Dämmplatte 2 und damit die Dübellänge davon unabhängig ist.

Die vorschlagsgemäß einsetzbaren Dübel 5 erlauben Logistikvorteile, insbesondere ein geringes Transportvolumen und/oder geringere Bevorratungsbestände, da Standarddübel eingesetzt werden können. Weiter müssen an der Baustelle nur geringe Volumen an Dübeln 5 gehandhabt werden.

Die vorschlagsgemäße Lösung verhindert eine Beschädigung der Dämmplatten 2 bzw. der Außenseite 2C bei der Montage am Bauwerk 4. Insbesondere kann ein sonst übliches Nacharbeiten oder Nachspachteln entfallen. Weiter kann ein ansonsten oftmals auftretender "Frässtaub" oder ein Austritt von Bohrmehl o. dgl. beim Bohren vermieden werden, insbesondere bei werksseitiger Ausbildung der Durchbrechungen 2D. In diesem Zusammenhang ist darauf hinzuweisen, dass der relativ große Durchmesser der Durchbrechungen 2D in den Dämmplatten 2 die Aufnahme von Bohrmehl gestattet, so dass unerwünschte Verunreinigungen und ein Austreten von Staub o. dgl. vermieden werden können.

Da die Oberfläche bzw. Außenseite 2C der Dämmplatten 2 nicht beschädigt werden und insbesondere ein sehr glattes Verschließen der Durchbrechungen 2D mit gleichem oder ähnlichem Dämmmaterial durch die Stopfen 2E ermöglicht wird, werden unterwünschte Erhebungen, unerwünschte Materialwechsel und dgl. vermieden, wodurch ein unerwünschtes Abzeichnen von Erhebungen, Vertiefungen o. dgl. auf der fertigen Außenseite, insbesondere auch im Putz 2F nach endgültiger Fertigstellung vermieden werden.

Ein weiterer Vorteil der vorliegenden Erfindung liegt darin, dass der bisher übliche Ablauf bei der Befestigung der Dämmplatten 2 am Bauwerk 4 erhalten werden kann.

Es wird eine sehr einfache, robuste Montage bzw. Befestigung, insbesondere ohne ein besonders aufwendiges Setzwerkzeug oder Fräswerkzeug, ermöglicht.

Die Dämmplatte 2 kann wie bisher am Bauwerk 4 angeklebt werden.

Die mit den Durchbrechungen 2D versehenen Dämmplatten 2 geben bereits ein optimales Dübelraster vor, so dass ein ansonsten oft erforderliches Anzeichen von Befestigungspositionen o. dgl. nicht erforderlich ist.

Die Gestaltung der Befestigungselemente 3 kann auf gewünschte Traglasten und gewünschte Fixierungsbereiche bzw. Verbindungsbereiche abgestimmt werden. Des Weiteren kann die Lage der Befestigungselemente 3 an der Dämmplatte 2 in optimaler Weise auf eine gewünschte Anordnung, beispielsweise zur Fixierung des Rands der Dämmplatte 2, angepasst werden.

Es sind sehr hohe Traglasten bei geringen Dübelmengen pro Quadratmeter erreichbar.

Die werksseitige Ausbildung der Durchbrechungen 2D führt zu sehr sauberen, definierten Montageöffnungen in der Dämmplatte 2 und erleichtert auch die Handhabung bei der Befestigung am Bauwerk 4. Alternativ oder zusätzlich wird hierdurch auch ein perfekter Sitz der Stopfen 2E ermöglicht oder unterstützt.

Vorzugsweise werden die Verbindungselemente, wie die Dübel 5 und/oder Schrauben 6, von der Außenseite 2C der Dämmplatten 2 aus zugeführt bzw. eingebracht im Gegensatz zu den Befestigungselementen 3. Jedoch ist grundsätzlich auch bei Einbringen der Befestigungselemente 3 von der Außenseite bzw. durch die erste Schicht 21 möglich.

Die Befestigungselemente 3 sind vorzugsweise aus Polyamid, einem glasfaserverstärktem Polyamid o. dgl. hergestellt und/oder sehr steif ausgebildet.

Durch das besonders bevorzugte Versenken der Befestigungselemente 3 in die Flachseite der ersten Schicht 21 durch das Einsetzen der Befestigungselemente 3 in entsprechende Vertiefungen oder Aussparungen 2B der Dämmplatte 2 wird bevorzugt eine glatte Seite zur Verbindung mit der zweiten Platte bzw. Schicht 22 erreicht. Dies ist insbesondere im Hinblick auf eine gute Stapelfähigkeit und/oder im Hinblick auf ein glattes bzw. gleichmäßiges Verbinden der beiden Platten bzw. Schichten 21 und 22 von Vorteil.

Die vorzugsweise vorgesehenen Vertiefungen bzw. Aussparungen 2B dienen insbesondere dazu, um das jeweilige Befestigungselement 3 lageorientiert und/oder zentrisch, insbesondere relativ zu der zugeordneten Durchbrechung 2D in der ersten Schicht 21 aufnehmen zu können. Die Vertiefungen bzw. Aussparungen 2B können dementsprechend auch Positioniermittel im Sinne der Vorsprünge 3C darstellen oder bilden.

Es ist anzumerken, dass die Bohrlochherstellung und das Dübelsetzen ggf. auch gleichzeitig, insbesondere mit einem entsprechenden Spezialwerkzeug, erfolgen kann.

Bei der voranstehend beschriebenen ersten Ausführungsform sind vorzugsweise sowohl die erste Platte bzw. Schicht 21 als auch die zweite Platte bzw. Schicht 22 jeweils zumindest im Wesentlichen durchgehend - insbesondere nur mit Ausnahme von Durchbrechungen 2D - ausgebildet.

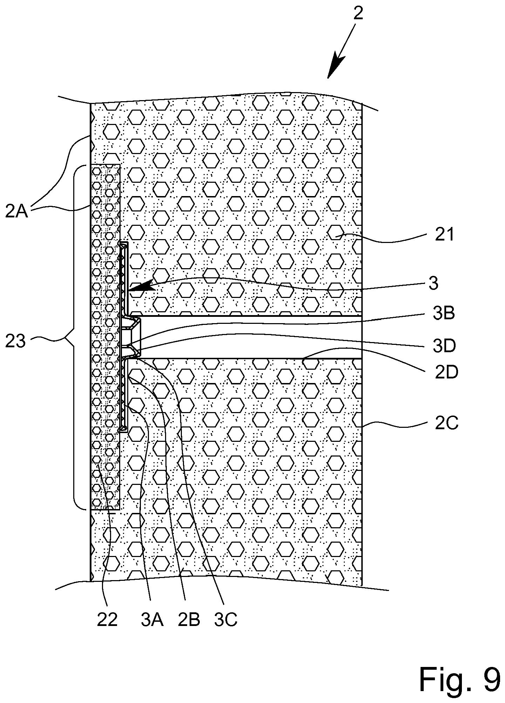

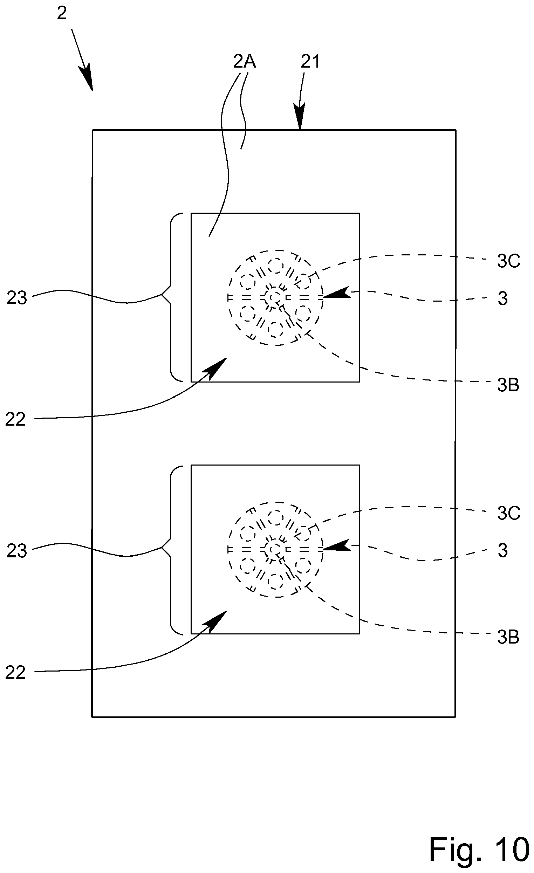

Nachfolgend wird eine zweite Ausführungsform der vorschlagsgemäßen Dämmplatte 2 anhand der Figuren 9 und 10 näher erläutert, wobei insbesondere nur auf wesentliche Unterschiede bzw. neue Aspekte näher eingegangen wird. Die bisherigen Ausführungen und Erläuterungen gelten insbesondere also entsprechend oder ergänzend, auch wenn eine diesbezügliche Wiederholung weggelassen ist.

Fig. 9 zeigt die Dämmplatte 2 gemäß der zweiten Ausführungsform in einem schematischen, ausschnittsweisen Schnitt ähnlich zu Fig. 1. Fig. 10 zeigt die Dämmplatte 2 gemäß der zweiten Ausführungsform in einer schematischen Draufsicht der Bauwerksseite 2A.

Bei der zweiten Ausführungsform ist die zweite Platte bzw. Schicht 22 vorzugsweise nicht durchgehend, sondern nur partiell bzw. kleinformatig (im Verhältnis zur Größe bzw. zum Format der Dämmplatte 2 bzw. ersten Schicht 21) ausgebildet. Im Gegensatz zur ersten Ausführungsform ist die zweite Platte bzw. Schicht 22 vorzugsweise also nicht durchgehend ausgebildet.

Besonders bevorzugt ist die Fläche bzw. Flächenerstreckung der zweiten Schicht 22 wesentlich kleiner als die Fläche bzw. Flächenerstreckung der Dämmplatte 2 bzw. ersten Schicht 21. Sie beträgt insbesondere weniger als 50%, besonders bevorzugt weniger als 30%, der Flächenerstreckung der Dämmplatte 2 bzw. ersten Schicht 21.

Vorzugsweise bildet die zweite Platte bzw. Schicht 22, also das zweite Dämmmaterial, einen oder mehrere Trägerabschnitte 23.

Die Trägerabschnitte 23 sind jeweils vorzugsweise plattenartig oder scheibenartig und/oder flach bzw. zumindest im Wesentlichen eben ausgebildet.

Die Trägerabschnitte 23 sind jeweils vorzugsweise in die Dämmplatte 2 bzw. erste Schicht 21 eingebettet oder eingeschäumt oder an diese angeschäumt.

Die Trägerabschnitte 23 einer Dämmplatte 2 sind vorzugsweise nur über die erste Schicht 21 miteinander verbunden.

Die Trägerabschnitte 23 sind vorzugsweise jeweils in die Bauwerksseite 2A der Dämmplatte 2 eingebettet und/oder bilden diese nur partiell.

Die Trägerabschnitte 23 sind vorzugsweise in ihrer Flächenerstreckung bzw. Draufsicht zumindest im Wesentlichen rund, beispielsweise kreisförmig, oder zumindest im Wesentlichen eckig, beispielsweise rechteckig, quadratisch oder mehreckig, ausgebildet.

Die Trägerabschnitte 23 weisen vorzugsweise eine Kantenlänge bzw. einen mittleren Durchmesser von mehr als 10 cm, insbesondere mehr als 15 cm, und/oder von weniger als 30 oder 35 cm, insbesondere weniger als 25 cm, auf.

Die Trägerabschnitte 23 weisen vorzugsweise eine Fläche bzw. maximale Flächenerstreckung auf, die mehr als das 1,5-fache, insbesondere mehr als das 2-fache, der Fläche bzw. maximalen Flächenerstreckung des zugeordneten bzw. darauf angeordneten Befestigungselements 3 beträgt.

Die Trägerabschnitte 23 erstrecken sich jeweils vorzugsweise seitlich in alle Richtungen über das zugeordnete Befestigungselement 3 hinaus.

Die Trägerabschnitte 23 sind vorzugsweise nicht untereinander bzw. nicht direkt miteinander durch das zweite Material verbunden. Jedoch können auch zwischen den Trägerabschnitten 23 Verbindungsbereiche aus dem zweiten Material gebildet sein, so dass sich beispielsweise ein gitterartiger Aufbau ergibt, wobei beispielsweise an bzw. unter Kreuzungspunkten die Befestigungselemente 3 angeordnet sind.

Die zweite Schicht 22 bzw. Trägerabschnitte 23 ist bzw. sind vorzugsweise vom Rand der Dämmplatte 2 beabstandet, so dass diese am Rand vorzugsweise allseitig von dem ersten Material bzw. der ersten Schicht 21 umgeben ist bzw. sind.

Die Trägerabschnitte 23 weisen vorzugsweise eine höhere Biegesteifigkeit als die erste Schicht 21 auf.

Besonders bevorzugt wird zunächst die erste Schicht 21 hergestellt, beispielsweise in einer Form aufgeschäumt, wobei Vertiefungen oder Aussparungen in der ersten Schicht 21 für die zweite Schicht 22 bzw. Trägerabschnitte 23 freigehalten oder nachträglich gebildet werden.

Die Befestigungselemente 3 werden dann in die Vertiefungen oder Aussparungen eingelegt, beispielsweise nach dem Aufschäumen bzw. Expandieren des ersten Materials oder ggf. auch davor in die Form eingesetzt oder eingebaut, beispielsweise über nicht dargestellte, vorzugsweise bolzenförmige Halter o. dgl. gehalten.

Anschließend werden die Aussparungen beispielsweise Vertiefungen mit dem zweiten Material gefüllt, um die zweite Schicht 22 bzw. Trägerabschnitte 23 zu bilden.

Vorzugsweise wird hierzu das zweite Material vorzugsweise die gleiche Form, ggf. nach entsprechenden Zurückziehen oder Öffnen von entsprechenden Schiebern o. dgl., eingebracht und aufgeschäumt bzw. expandiert, um die zweite Schicht 22 bzw. Trägerabschnitte 23 zu bilden. Bei diesem (zweiten) Aufschäumen bzw. Expandieren wird besonders bevorzugt das erste Material nachträglich nochmals aufgeschäumt bzw. (weiter) expandiert, wodurch eine feste bzw. unlösbare bzw. stoffschlüssige Verbindung zwischen den beiden Materialien und damit zwischen den beiden Schichten 21 und 22 bzw. zwischen der Schicht 21 und den Trägerabschnitten 23 erreicht werden kann bzw. wird.

Gemäß einer bevorzugten Variante zur Herstellung der vorschlagsgemäßen Dämmplatte 2 werden die Befestigungselemente 3 vorab in eine Form eingesetzt oder eingebaut, beispielsweise über nicht dargestellte, vorzugsweise bolzenförmige Halter o. dgl. fixiert, und erst dann die Materialien in die Form eingebracht bzw. in der Form geschäumt. Insbesondere wird zunächst das erste Material (vor)geschäumt und dann das zweite Material geschäumt bzw. expandiert.

Besonders bevorzugt erfolgt das Expandieren durch Wärme- bzw. Hitzeeinwirkung und Anlegen eines Unterdrucks.

Besonders bevorzugt wird ein EPS als erstes Material und ein vorzugsweise anderes, insbesondere dichteres oder festeres EPS als zweites Material eingesetzt.

Generell ist anzumerken, dass die vorschlagsgemäße Dämmplatte 2, insbesondere gemäß der ersten und zweiten Ausführungsform, vorzugsweise zumindest im Wesentlichen ausschließlich aus den beiden Dämmmaterialien bzw. Schichten 21 und 22 sowie den eingelegten bzw. eingebetteten Befestigungselementen 3 hergestellt oder aufgebaut ist bzw. besteht und/oder zumindest im Wesentlichen daraus ihre Steifigkeit und/oder Tragfähigkeit erhält. Insbesondere können sonstige Versteifungselemente, Rahmen, Laminierungen o. dgl. entfallen. Dies schließt jedoch nicht den Einsatz von zusätzlichen Schutzschichten, beispielsweise einer Schicht zum UV-Schutz auf der Außenseite 2C, die ggf. wiederum aus einem entsprechenden (anderen) Dämmmaterial besteht oder hergestellt sein kann, aus.

Die Dämmplatte 2 ist insbesondere metallfrei aufgebaut und/oder ohne Einsatz von metallischen Verstärkungselementen o. dgl. hergestellt und/oder befestigbar bzw. einsetzbar.

Die vorschlagsgemäße Dämmplatte 2 zeichnet sich insbesondere dadurch aus, dass das zweite Dämmmaterial mit dem ersten Dämmmaterial zumindest im Wesentlichen vollflächig, flachseitig, direkt, unlösbar und/oder stoffschlüssig verbunden ist, insbesondere durch Verkleben, Anschäumen, Verschweißen o. dgl..

Die vorschlagsgemäße Dämmplatte 2 zeichnet sich insbesondere dadurch aus, dass die zweite Schicht 22 bzw. deren Trägerabschnitte 23 zumindest im Wesentlichen vollflächig, flachseitig, direkt, unlösbar und/oder stoffschlüssig mit der ersten Schicht 21, insbesondere durch Verkleben, Anschäumen oder Verschweißen, verbunden ist bzw. sind.

Besonders bevorzugt wird die im Wesentlichen die Dämmplatte 2 bildende erste Schicht 21 über die feste bzw. stoffschlüssige und/oder zumindest weitgehend vollflächige bzw. flachseitige Verbindung mit der zweiten Schicht 22 bzw. den Trägerabschnitten 23 in definierter Weise befestigt bzw. gehalten, um die gewünschten Traglasten bzw. Tragfähigkeiten zu erreichen, wobei die Befestigung der zweiten Schicht 22 bzw. Trägerabschnitte 23 über die Befestigungselemente 3 an dem zugeordneten Bauwerk 4 erfolgt. Die auch mögliche zusätzliche Verklebung der ersten Schicht 21 - im Falle der zweiten Ausführungsform beispielsweise über die Schicht 4B, wie in Fig. 3 dargestellt - fällt hierbei nicht ins Gewicht bzw. kann ggf. eine zusätzliche Sicherung bzw. Befestigung darstellen, die im Hinblick auf eine definierte Befestigung und die Erreichung definierter Traglasten vorsorglich unberücksichtigt bleibt.

Einzelne Aspekte und Merkmale der vorliegenden Erfindung und der verschiedenen Ausführungsvarianten und -formen können beliebig miteinander kombiniert, aber auch unabhängig voneinander realisiert werden.

### Bezugszeichenliste:

- 1: System
- 2: Dämmplatte
2A Bauwerksseite
2B Aussparung
2C Außenseite
2D Durchbrechung
2E Stopfen
2F Putz
21 erste Schicht
22 zweite Schicht
23 Trägerabschnitt
- 3: Befestigungselement
3A Abschnitt
3B Durchbrechung
3C Vorsprung
3D Einfuhrschräge
- 4: Bauwerk
4A Oberfläche
4B Schicht
4C Bohrung
- 5: Dübel
5A Dübelkopf
- 6: Schraube
6A Schraubenkopf
- 7: Werkzeug
7A Werkzeugkopf
7B Schaft
7C erster Führungsabschnitt
7D zweiter Führungsabschnitt
7E erstes Markiermittel
7F zweites Markiermittel

## Patentansprüche

1. Dämmplatte (2) mit in die Dämmplatte (2) eingebetteten oder eingebrachten Befestigungselementen (3) zur Befestigung an einem Bauwerk (4),
wobei die Dämmplatte (2) eine erste Schicht (21) aus einem ersten Dämmmaterial aufweist, die die Befestigungselemente (3) außenseitig zumindest im Wesentlichen überdeckt, und
wobei die Dämmplatte (2) eine zweite Schicht (22) aus einem zweiten Dämmmaterial aufweist, die die Befestigungselemente (3) bauwerksseitig zumindest im Wesentlichen, vorzugsweise vollständig, überdeckt,
wobei die beiden Schichten (21, 22) zumindest im Wesentlichen vollflächig verbunden sind,
wobei die Dämmmaterialien eine Wärmeleitfähigkeit von weniger als 0,06 W/(m-K) aufweisen,
**dadurch gekennzeichnet,**
**dass** die zweite Schicht (22) eine höhere Biegesteifigkeit als die erste Schicht (21) aufweist und/oder dass das zweite Dämmmaterial eine höhere Druckfestigkeit, und/oder Biegefestigkeit und/oder Dichte als das erste Dämmmaterial aufweist.

2. Dämmplatte gemäß Anspruch 1, **dadurch gekennzeichnet, dass** die zweite Schicht (22) die erste Schicht (21) nur teilweise überdeckt.

3. Dämmplatte nach Anspruch 2, **dadurch gekennzeichnet, dass** die zweite Schicht (22) vom Rand der Dämmplatte (2) bzw. ersten Schicht (21) beabstandet ist bzw. endet.

4. Dämmplatte nach Anspruch 2 oder 3, **dadurch gekennzeichnet, dass** die zweite Schicht (22) mehrere Trägerabschnitte (23) zur bauwerksseitigen Abdeckung zugeordneter Befestigungselemente (3) bildet.

5. Dämmplatte nach Anspruch 4, **dadurch gekennzeichnet, dass** die Trägerabschnitte (23) in die erste Schicht (21) eingebettet sind und/oder mit der ersten Schicht (21) eine vorzugsweise zumindest im Wesentlichen ebene Bauwerksseite (2A) der Dämmplatte (2) bilden.

6. Dämmplatte nach Anspruch 4 oder 5, **dadurch gekennzeichnet, dass** die Trägerabschnitte (23) nur über die erste Schicht (21) miteinander verbunden sind.

7. Dämmplatte gemäß einem der voranstehenden Ansprüche, **dadurch gekennzeichnet, dass** die erste Schicht (21) aus einem ersten geschäumten Dämmmaterial und die zweite Schicht (22) aus einem zweiten geschäumten Dämmmaterial hergestellt ist, insbesondere wobei das zweite Dämmmaterial feiner oder anders als das erste Dämmmaterial aufgeschäumt ist.

8. Dämmplatte gemäß einem der voranstehenden Ansprüche, **dadurch gekennzeichnet, dass** die erste und die zweite Schicht (21, 22) thermisch miteinander verbunden sind.

9. Dämmplatte gemäß einem der voranstehenden Ansprüche, **dadurch gekennzeichnet, dass** die Befestigungselemente (3) zumindest im Wesentlichen tellerartig und/oder plattenartig bzw. flach ausgebildet sind und/oder jeweils einen plattenförmigen oder flachen Abschnitt (3A) aufweisen.

10. Dämmplatte gemäß einem der voranstehenden Ansprüche, **dadurch gekennzeichnet, dass** die Befestigungselemente (3) bzw. flachen Abschnitte (3A) der Befestigungselemente (3) im Bereich der Grenzfläche zwischen den beiden Schichten (21, 22) oder zumindest im Wesentlichen zwischen den Schichten (21, 22) angeordnet sind und/oder zumindest im Wesentlichen parallel zu einer Flachseite der Dämmplatte (2) verlaufen.

11. Dämmplatte gemäß einem der voranstehenden Ansprüche, **dadurch gekennzeichnet, dass** die beiden Schichten (21, 22) zumindest im Wesentlichen flachseitig und/oder stoffschlüssig verbunden sind, insbesondere zumindest in überlappenden Bereichen neben den Befestigungselementen (3).

12. Dämmplatte nach einem der voranstehenden Ansprüche, **dadurch gekennzeichnet, dass** Lasten von den Befestigungselementen (3) über die zweite Schicht (22) großflächig auf die erste Schicht (21) oder umgekehrt übertragen werden.

13. Verfahren zum Herstellen einer Dämmplatte (2) gemäß einem der voranstehenden Ansprüche,
wobei zwischen einer ersten Platte als erste Schicht (21) und einer zweiten Platte als zweite Schicht (22) die Befestigungselemente (3) eingelegt und die beiden Platten dann zumindest im Wesentlichen vollflächig miteinander verbunden werden, und/oder
wobei die Befestigungselemente (3) vorab in eine Form eingesetzt oder eingebaut werden, und erst dann die Dämmmaterialien in die Form eingebracht werden, und/oder
wobei zunächst die erste Schicht (21) hergestellt wird, wobei Vertiefungen oder Aussparungen in der ersten Schicht (21) für die zweite Schicht (22) bzw. Trägerabschnitte (23) freigehalten oder nachträglich gebildet werden, wobei die Befestigungselemente (3) dann in die Vertiefungen oder Aussparungen eingelegt werden und anschließend die Aussparungen oder Vertiefungen mit dem zweiten Material gefüllt werden, um die zweite Schicht (22) bzw. Trägerabschnitte (23) zu bilden.

14. Verfahren nach Anspruch 13, **dadurch gekennzeichnet, dass** die Befestigungselemente (3) zur Befestigung an einem Bauwerk (4) in die Dämmplatte (2) eingebracht werden, so dass plattenförmige oder flache Halteabschnitte (3A) der Befestigungselemente (3) im Grenzbereich zwischen den beiden Schichten (21, 22) angeordnet werden.

15. Verwendung einer Dämmplatte (2) gemäß einem der Ansprüche 1 bis 12 zum Herstellen einer Wärmedämmung, wobei die Dämmplatten (2) mit ihrer Bauwerksseite (2A) zu einem Bauwerk (4) weisend an dem Bauwerk (4) befestigt werden, indem die in die Dämmplatte (2) eingebetteten bzw. eingebrachten Befestigungselemente (3) mit dem Bauwerk (4) verbunden oder verdübelt werden.

## Claims

1. Insulating panel (2) with fastening elements (3) embedded or incorporated into the insulating panel (2) for fastening to a building (4),
wherein the insulating panel (2) comprises a first layer (21) made of a first insulating material which at least essentially covers the fastening elements (3) on the exterior side, and
wherein the insulating panel (2) comprises a second layer (22) made of a second insulating material which at least essentially, preferably completely, covers the fastening elements (3) on the building side,
wherein the two layers (21, 22) are at least essentially bonded over the entire surface,
wherein the insulating materials comprise a thermal conductivity of less than 0.06 W/(m-K),
**characterised in**
**that** the second layer (22) comprises a higher flexural rigidity than the first layer (21) and/or that the second insulating material comprises a higher compressive strength and/or flexural strength and/or density than the first insulating material.

2. Insulating panel according to claim 1, **characterised in that** the second layer (22) only partially covers the first layer (21).

3. Insulating panel according to claim 2, **characterised in** the second layer (22) is spaced from or ends at a distance from the edge of the insulating panel (2) and/or first layer (21).

4. Insulating panel according to claim 2 or 3, **characterised in that** the second layer (22) forms a plurality of support portions (23) for covering assigned fastening elements (3) on the building side.

5. Insulating panel according to claim 4, **characterised in that** the support portions (23) are embedded into the first layer (21) and/or form with the first layer (21) a preferably at least essentially flat building side (2A) of the insulating panel (2).

6. Insulating panel according to claim 4 or 5, **characterised in that** the support portions (23) are connected with each other only via the first layer (21).

7. Insulating panel according to one of the preceding claims, **characterised in that** the first layer (21) is made of a first foamed insulating material and the second layer (22) is made of a second foamed insulating material, preferably wherein the second insulating material is more finely or differently foamed up than the first insulating material.

8. Insulating panel according to one of the preceding claims, **characterised in that** the first and the second layer (21, 22) are thermally bonded to one another.

9. Insulating panel according to one of the preceding claims, **characterised in that** the fastening elements (3) are formed to be at least essentially disc-shaped and/or plate-shaped and/or planar, and/or respectively comprise a plate-shaped or planar portion (3A).

10. Insulating panel according to one of the preceding claims, **characterised in that** the fastening elements (3) or the planar portions (3A) of the fastening elements (3) are arranged in the region of the boundary surface between the two layers (21, 22) or at essentially between the layers (21, 22) and/or run at least essentially parallel to a planar side of the insulating panel (2).

11. Insulating panel according to one of the preceding claims, **characterised in that** the two layers (21, 22) are connected at least essentially on the planar sides thereof and/or are integrally bonded, in particular at least in overlapping regions beside the fastening elements (3).

12. Insulating panel according to one of the preceding claims, **characterised in that** loads from the fastening elements (3) are transmitted via the second layer (22) over a large area onto the first layer (21), or vice versa.

13. Method for producing an insulating panel (2) according to one of the preceding claims,
wherein the fastening elements (3) are inserted between a first plate as the first layer (21) and a second plate as the second layer (22), and the two plates are then bonded to one another at least essentially over the entire surface, and/or
wherein the fastening elements (3) are inserted or integrated into a form in advance, and only then the insulating materials are introduced into the form, and/or
wherein first the first layer (21) is produced, wherein indentations or recesses are kept clear or are formed subsequently in the first layer (21) for the second layer (22) and/or support portions (23), wherein the fastening elements (3) are then inserted into the indentations or recesses and afterwards the indentations or recesses are filled with the second material in order to form the second layer (22) and/or support portions (23).

14. Method according to claim 13, **characterised in that** the fastening elements (3) for fastening to a building (4) are incorporated into the insulating panel (2) such that plate-shaped or planar holding portions (3A) of the fastening elements (3) are arranged in the boundary region between the two layers (21, 22).

15. Use of an insulating panel (2) according to one of claims 1 to 12 for the production of a thermal insulation, wherein the insulating panels (2) with their building side (2A) facing a building (4) are fixed to the building (4) by connecting or dowelling the fastening elements (3), which are embedded or incorporated into the insulating panel (2), to the building (4).

## Revendications

1. Panneau isolant (2) comprenant des éléments de fixation (3) insérés ou encapsulés dans le panneau isolant (2) pour être fixé à une construction (4),
le panneau isolant (2) comportant une première couche (21) d'un premier matériau isolant, qui recouvre au moins sensiblement les éléments de fixation (3) côté extérieur, et
le panneau isolant (2) comportant une seconde couche (22) d'un second matériau isolant, qui recouvre, au moins sensiblement, de préférence complètement, les éléments de fixation (3) côté construction,
les deux couches (21, 22) étant reliées au moins sensiblement sur toute leur surface,
les matériaux isolants ayant une conductivité thermique inférieure à 0,06 W/(m-K), **caractérisé**
**en ce que** la seconde couche (22) présente une rigidité à la flexion supérieure à celle de la première couche (21) et/ou **en ce que** le second matériau isolant présente une résistance à la pression et/ou une résistance à la flexion et/ou une densité supérieures au premier matériau isolant.

2. Panneau isolant selon la revendication 1, **caractérisé en ce que** la seconde couche (22) recouvre uniquement partiellement la première couche (21).

3. Panneau isolant selon la revendication 2, **caractérisé en ce que** la seconde couche (22) est espacée du bord du panneau isolant (2) et/ou de la première couche (21) ou se termine à une certaine distance du bord.

4. Panneau isolant selon la revendication 2 ou 3, **caractérisé en ce que** la seconde couche (22) forme une pluralité de parties de support (23) pour les éléments de fixation (3) associés à la couverture côté construction.

5. Panneau isolant selon la revendication 4, **caractérisé en ce que** les parties de support (23) sont encapsulées dans la première couche (21) et/ou forment un côté de construction (2A) de préférence au moins sensiblement plan du panneau isolant (2) avec la première couche (21).

6. Panneau isolant selon la revendication 4 ou 5, **caractérisé en ce que** les parties de support (23) ne sont reliées entre elles que par l'intermédiaire de la première couche (21).

7. Panneau isolant selon l'une des revendications précédentes, **caractérisé en ce que** la première couche (21) est fabriquée en un premier matériau isolant mousse et la seconde couche (22) est fabriquée en un second matériau isolant mousse, en particulier le second matériau isolant étant expansé de manière plus fine ou de différente manière que le premier matériau isolant.

8. Panneau isolant selon l'une des revendications précédentes, **caractérisé en ce que** la première et la seconde couche (21, 22) sont thermiquement reliées entre elles.

9. Panneau isolant selon l'une des revendications précédentes, **caractérisé en ce que** les éléments de fixation (3) sont au moins sensiblement plats et/ou conçus sous forme de plateau et/ou de plaque et/ou comportent respectivement une partie (3A) plate ou en forme de plaque.

10. Panneau isolant selon l'une des revendications précédentes, **caractérisé en ce que** les éléments de fixation (3) ou les parties plates (3A) des éléments de fixation (3) sont disposés dans la région de l'interface entre les deux couches (21, 22) ou au moins sensiblement entre les couches (21, 22) et/ou s'étendent au moins sensiblement parallèlement à un côté plat du panneau isolant (2).

11. Panneau isolant selon l'une des revendications précédentes, **caractérisé en ce que** les deux couches (21, 22) sont reliées au moins sensiblement par liaison de matière et/ou par leur face plate, en particulier au moins dans des zones se chevauchant à proximité des éléments de fixation (3).

12. Panneau isolant selon l'une des revendications précédentes, **caractérisé en ce que** le poids des éléments de fixation (3) est transmis par l'intermédiaire de la seconde couche (22) sur une grande surface à la première couche (21) ou inversement.

13. Procédé de fabrication d'un panneau isolant (2) selon l'une des revendications précédentes,
entre une première plaque en tant que première couche (21) et une seconde plaque en tant que seconde couche (22) étant insérés les éléments de fixation (3) et les deux plaques étant alors au moins sensiblement sur toute leur surface reliées entre elles, et/ou
les éléments de fixation (3) étant insérés ou installés à l'avance dans un moule et ensuite seulement les matériaux isolants étant introduits dans le moule, et/ou
la première couche (21) étant d'abord produite, des renfoncements ou des évidements dans la première couche (21) pour la seconde couche (22) et/ou des parties de support (23) étant maintenus libres ou formés ultérieurement, les éléments de fixation (3) étant ensuite insérés dans les renfoncements ou les évidements, puis les renfoncements ou les évidements étant remplis avec le second matériau pour former la seconde couche (22) et/ou les parties de support (23).

14. Procédé selon la revendication 13, **caractérisé en ce que** les éléments de fixation (3) destinés à être fixés à une construction (4) sont insérés dans le panneau isolant (2), de sorte que des parties de maintien en forme de plaque ou plates (3A) des éléments de fixation (3) soient disposées dans la zone d'interface entre les deux couches (21, 22).

15. Utilisation d'un panneau isolant (2) selon l'une des revendications 1 à 12 pour fabriquer une isolation thermique, les panneaux isolants (2) étant fixés à la construction (4), leur côté construction (2A) étant orienté vers une construction (4) du fait que les éléments de fixation (3) insérés ou encapsulés dans le panneau isolant (2) sont reliés ou chevillés à la construction (4).
